# FASCICULE DE BREVET EUROPEEN

(11) **EP 3 653 930 B1**
(45) Date de publication et mention de la délivrance du brevet: **29.01.2025**
(21) Numéro de dépôt: 19208475.4
(22) Date de dépôt: 12.11.2019
(51) Int. Cl.: F21V 8/00, G02F 1/13357, G02F 1/1335

(54) **DISPOSITIF D'ECLAIRAGE COMPATIBLE D'EQUIPEMENT(S) DE VISION NOCTURNE A FENETRES D'INJECTION LATERALE DE LUMIERE DIURNE ET NOCTURNE**
BELEUCHTUNGSGERÄT KOMPATIBEL MIT NACHTSICHTGERÄTEN MIT SEITLICHEN LICHTINJEKTIONSFENSTERN VON TAGESLICHT UND NACHTLICHT
LIGHTING DEVICE COMPATIBLE WITH NIGHT VISION EQUIPMENT HAVING LATERAL LIGHT INJECTION WINDOWS OF DAY LIGHT AND NIGHT LIGHT

(30) Priorité: 15.11.2018 FR 1871860
(43) Date de publication de la demande: 20.05.2020
(73) Titulaire: THALES, 92190 Meudon (FR)
(72) Inventeur: TORAILLE, Vincent, 38430 MOIRANS (FR); ROCCA, Patrick, 38430 MOIRANS (FR)
(74) Mandataire: Atout PI Laplace

(56) Documents cités:
- WO-A1-2006/043344
- CN-A- 104 635 381
- KR-A- 20110 056 991
- US-A1- 2005 248 734
- US-A1- 2007 274 099
- US-B1- 6 574 030
- US-B1- 6 842 204

## Description

### DOMAINE TECHNIQUE

L'invention concerne un dispositif d'éclairage à diodes électroluminescentes pour écrans plats de visualisation du type à matrice de cristaux liquides ("matrice LC" dans la suite), qui propose deux modes de rétro-éclairage de la matrice LC, l'un adapté à une utilisation (observation) de l'écran de jour, et l'autre adapté à une utilisation de nuit et compatible avec des équipements dits "NVIS" (*Night Vision Imaging System*) comme par exemple des jumelles de vision nocturne à amplification de lumière dites jumelles "NVG" (acronyme pour *Night Vision Google*)*.* L'invention s'applique notamment aux dispositifs de visualisation, y compris tête haute (HUD), utilisés dans les cockpits d'aéronefs.

### ETAT DE LA TECHNIQUE

Les deux modes diurne et nocturne de rétro-éclairage de matrice LC ont chacun leur problématique. Si dans les deux cas, on recherche une bonne uniformité du rétro-éclairage (c'est-à-dire de l'éclairage de toute la surface arrière de matrice LC), car cela conditionne la qualité optique de l'image, pour le mode diurne, on a besoin d'une lumière blanche avec une très forte luminosité, pour avoir suffisamment de contraste comparé à la très forte luminosité que l'on a, de jour, à l'intérieur du cockpit d'un aéronef ; alors que pour le mode nocturne, on a besoin de peu de puissance lumineuse, mais le spectre d'émission doit être en dehors de la bande infrarouge ou proche infrarouge, pour être compatible de l'observation de l'écran avec des équipements NVIS tels que des jumelles NVG.

Dans les technologies les plus récentes, les sources d'éclairage sont à base de diodes électroluminescentes. La source diurne peut ainsi comprendre un ensemble de diodes électroluminescentes blanches ; ou bien des arrangements de diodes qui émettent dans des couleurs différentes, par exemple des arrangements de diodes RVB "rouge", "vert", "bleu", ce qui permet généralement d'obtenir une meilleure colorimétrie. Le nombre de diodes utilisées dépend de la place disponible et de la puissance des diodes pour répondre au besoin en puissance lumineuse et assurer au mieux l'homogénéité de l'éclairage sur toute la face arrière de la matrice LC. La source nocturne peut utiliser une source d'éclairage conçue pour émettre dans le spectre admissible. Une autre réalisation connue utilise une ou des diodes blanches associées individuellement ou collectivement à un filtre spécifique appelé filtre "NVIS" qui permet de filtrer le rayonnement infra rouge et proche infrarouge pour fournir en sortie un rayonnement qui a un spectre compatible avec l'utilisation des équipements NVIS. On peut également utiliser des arrangements de diodes RVB, avec un filtre NVIS associé aux diodes rouges.

L'invention est plus particulièrement décrite dans la suite dans un contexte de sources d'éclairage à diodes électroluminescentes, blanches ou de couleur, avec un filtrage NVIS adéquat pour la source nocturne, mais la solution de l'invention pourrait s'appliquer à d'autres sources communément employées, telles que les lampes fluorescentes ou incandescentes.

L'invention concerne plus particulièrement les architectures de dispositifs d'éclairage qui utilisent un même guide de lumière prismatique pour diffuser la lumière fournie par les deux sources de rétro-éclairage, c'est-à-dire la source d'éclairage "diurne" et la source d'éclairage "nocturne".

Un guide de lumière prismatique se présente généralement sous la forme d'un pavé droit transparent (transparence optique) de faible épaisseur (lame mince) disposé sous (à l'arrière de) la matrice LC de l'écran, et il s'agit de transmettre la lumière fournie par chacune des deux sources de rétro-éclairage depuis la face inférieure du guide, pour la diffuser par la face supérieure du guide disposée sous le plan de la matrice LC. Une architecture correspondante est par exemple décrite dans les demandes US 8, 628, 206 ou US 7, 924, 371. On a alors un entrelacement physique des diodes diurnes et nocturnes à l'arrière du guide, ce qui n'est pas optimal en terme en termes de densité de diodes diurnes, car les diodes nocturnes imposent des espacements plus grands, du fait de leur capuchon individuel de filtrage NVIS. Cette configuration n'est pas optimale non plus en terme d'encombrement, car pour assurer une diffusion bien homogène de la lumière en sortie de prisme, il faut placer la carte électronique support des diodes dans un plan assez en arrière du guide, d'autant plus en arrière que la densité de diodes est plus faible.

La demande EP 0 560 614 propose une autre architecture qui utilise un éclairage par la tranche ("*edge lit*") pour la vision nocturne : les diodes de la source d'éclairage nocturne sont placées sur un bord du pavé. On gagne donc sur l'encombrement par rapport à l'architecture précédente : l'écartement des diodes diurnes étant moins contraint (il n'y a plus à tenir compte de l'encombrement des diodes nocturnes), on peut densifier plus le tapis de diodes diurnes. Néanmoins, la distance de recul reste de l'ordre de 10 fois l'épaisseur du guide de lumière. Par exemple, avec un guide de lumière prismatique de quelques millimètres d'épaisseur, la distance de recul du tapis diurne par rapport à la face arrière du guide sera de l'ordre de 4 à 5 centimètres.

Par ailleurs, si on utilise un guide de lumière standard, la diffusion de lumière nocturne par la face supérieure diffusante du guide n'est pas très homogène : presque toute la lumière est extraite à l'entrée du guide. Pour améliorer cela, il faut que l'extraction de lumière se fasse progressivement sur toute la longueur du guide. On parle de guide à gradient d'extraction, ce qui s'obtient par exemple par des microstructures dont l'espacement varie sur la longueur du guide ou par une variation d'épaisseur du guide, dans le sens longitudinal (correspondant à la direction d'injection latérale). Mais il faut compenser ce gradient sur la voie diurne, pour conserver une diffusion homogène sur la voie diurne. On peut faire cela en utilisant une technique dite de *"local dimming",* par laquelle on règle l'intensité de courant délivrée à chaque diode, en fonction de sa position sur l'axe longitudinal d'injection de lumière. C'est une solution assez coûteuse, car il faut intégrer l'électronique de réglage de chaque diode de la source d'éclairage diurne au moins, et prévoir une étape de calibrage correspondante, pour une application ou un produit donné.

Pour améliorer la compacité, la demande WO2016/030217 propose de disposer les diodes d'éclairage diurne en rangée(s) le long d'une face latérale du guide (face d'entrée) et prévoit l'intégration d'un guide de lumière spécifique à la voie nocturne, en forme de lame mince, entre cette face d'entrée et la rangée des diodes diurnes. La fonction de ce guide spécifique est d'extraire la lumière issue d'une diode d'éclairage nocturne (avec filtre) qui est injectée par une face latérale de ce guide spécifique, et qui en ressort par une pluralité de faces diffusantes de ce guide qui sont disposées au niveau et entre les diodes d'éclairage diurne. C'est-à-dire que ce guide de lumière spécifique a pour effet technique de créer des sources ponctuelles de diffusion d'éclairage nocturne, qui sont dispersées parmi ou entre les diodes diurnes, permettant d'injecter la lumière issue de ces sources ponctuelles "nocturnes" par la même face d'entrée du guide de lumière principal que les diodes diurnes. Ce faisant on retrouve au moins en partie les défauts d'un entrelacement physique entre les positions des diodes diurnes et les sources ponctuelles de diffusions nocturnes créées par le guide spécifique. En particulier, du fait de l'entrelacement des faces diffusantes du guide spécifique et des diodes diurnes, la conception et le placement de ce guide spécifique par rapport aux diodes d'éclairage diurne sont délicats si on veut obtenir une bonne homogénéité de la diffusion de lumière pour les deux modes et une puissance suffisante en mode diurne.

Le document US2005/248734 décrit une architecture de projecteur compatible d'une vision de jour et de nuit et utilisant deux sources indépendantes.

Le document WO2006/04334 décrit un module d'éclairage d'un écran plat utilisant une forme particulière de guide de lumière.

### RESUME DE L'INVENTION

L'invention propose un dispositif d'éclairage qui permet d'obtenir plus facilement un éclairage bien homogène avec des performances optimisées sur chacune des voies, qui est basé sur un éclairage par la tranche d'un pavé principal, dans une fenêtre d'injection propre à chaque voie délimitée par au moins un prisme auxiliaire accolé par une de ses faces sur une face latérale du pavé utilisée comme face d'entrée. On montre que l'on peut régler chaque voie indépendamment de l'autre en fonction de ses caractéristiques propres, ce qui est favorable en termes de puissance et d'homogénéité et que l'on obtient une bonne compacité.

Pour la bonne compréhension de l'invention il convient d'abord de rappeler la définition d'un prisme droit et des termes associés utilisés dans la présente description : solide ayant deux faces polygonales identiques et parallèles, superposées, et que l'on appelle généralement "bases" ; et autant de faces latérales rectangles que de sommets du polygone de base.

Dans l'invention, le guide de lumière utilise un pavé principal, qui correspond à un prisme droit à base rectangulaire, comportant une base inférieure et une base supérieure (qui est celle par laquelle la lumière est diffusée en sortie vers la face arrière de matrice LC à rétro-éclairer) et quatre faces latérales rectangulaires. Le guide de lumière utilise aussi au moins un prisme auxiliaire qui est un prisme droit à base triangle rectangle, avec donc deux bases triangles rectangles et trois faces latérales rectangulaires, dont deux sont à angle droit.

Ceci étant précisé, l'invention propose une solution de type éclairage par la tranche dans laquelle les deux sources d'éclairage sont placées du même côté, et la face latérale du pavé principal utilisée comme face d'entrée principale est structurée dans la hauteur en deux fenêtres d'injection de lumière, une par source d'éclairage, diurne et nocturne, par au moins un prisme auxiliaire qui est un prisme droit à base triangle rectangle, dont l'une au moins de ses trois faces latérales est réfléchissante.

Cette solution technique qui définit une fenêtre d'injection latérale propre pour chaque source, permet d'optimiser chacune des voies diurne et nocturne, tant sur le plan de la compacité et des performances lumineuses, en fonction de ses caractéristiques propres (taille, puissance et écartement minimum des diodes) sans être limité par des contraintes liées à l'autre voie (pas d'entrelacement). On obtient un dispositif d'éclairage de compacité optimale, tout en offrant une grande qualité de diffusion de lumière par la face de sortie du guide dans chacun des deux modes de vision diurne et nocturne.

L'invention concerne donc un dispositif d'éclairage selon la revendication indépendante 1. D'autres modes de réalisation sont définis par les revendications dépendantes.

D'autres caractéristiques, détails et avantages de l'invention ressortiront à la lecture de la description suivante, faite en référence aux dessins annexés à titre d'exemple et qui représentent respectivement :
- la figure 1, une vue schématique en perspective d'un pavé droit principal de guide de lumière ;
- la figure 2, deux fenêtres d'injection définies sur une face latérale d'un pavé droit principal de guide de lumière selon l'invention ;
- la figure 3, une vue schématique en perspective d'un guide de lumière formé d'un pavé droit principal et d'un prisme auxiliaire accolé sur une face latérale selon un mode de réalisation de l'invention pour former deux fenêtres d'injection, une par source d'éclairage ;
- la figure 4, une vue schématique en coupe d'un agencement correspondant avec les sources d'éclairage diurne et nocturne, dans un exemple où les fenêtres d'injection sont de hauteur sensiblement égales ;
- la figure 5, une vue schématique en coupe d'un prisme auxiliaire d'un guide de lumière selon l'invention qui est configuré pour réaliser un filtre collectif NVIS de source d'éclairage nocturne ;
- les figures 6 et 7, une vue schématique en coupe et en perspective d'un dispositif d'éclairage avec un guide de lumière selon un deuxième mode de réalisation de l'invention ;
- la figure 8, une vue schématique en coupe d'une variante de mise en oeuvre de la deuxième réalisation de l'invention ;
- la figure 9, une vue schématique en coupe d'un dispositif d'éclairage avec un guide de lumière selon un troisième mode de réalisation de l'invention ; et
- la figure 10, une vue schématique en coupe illustrant une variante de ce troisième mode de réalisation.

### DESCRIPTION DETAILLEE

Un dispositif d'éclairage selon l'invention adapté pour le rétro-éclairage d'une matrice à cristaux liquides d'un dispositif de visualisation (écran plat, ou viseur tête haute (HUD) par exemple) en mode diurne ou bien en mode nocturne avec compatibilité NVIS, utilise un guide de lumière qui est agencé avec des sources d'éclairage diurne et nocturne, pour éclairer toute la face arrière de la matrice avec la lumière correspondant au mode de vision actif (diurne ou nocturne) de la manière la plus homogène possible et avec le moins de perte de luminance possible dans le guide de lumière. Sauf si l'en est précisé autrement, les sources d'éclairage diurne et nocturne sont des sources d'éclairage conventionnelles, formées par au moins une rangée de diodes électroluminescentes qui sont disposées régulièrement sur une carte support et qui émettent dans une direction orthogonale au plan de la carte support (émission vers le haut). Ce sont des diodes blanches ou de couleur, avec filtrage NVIS (diodes blanches ou rouges) pour la source nocturne. Dans la suite on parle simplement de diodes.

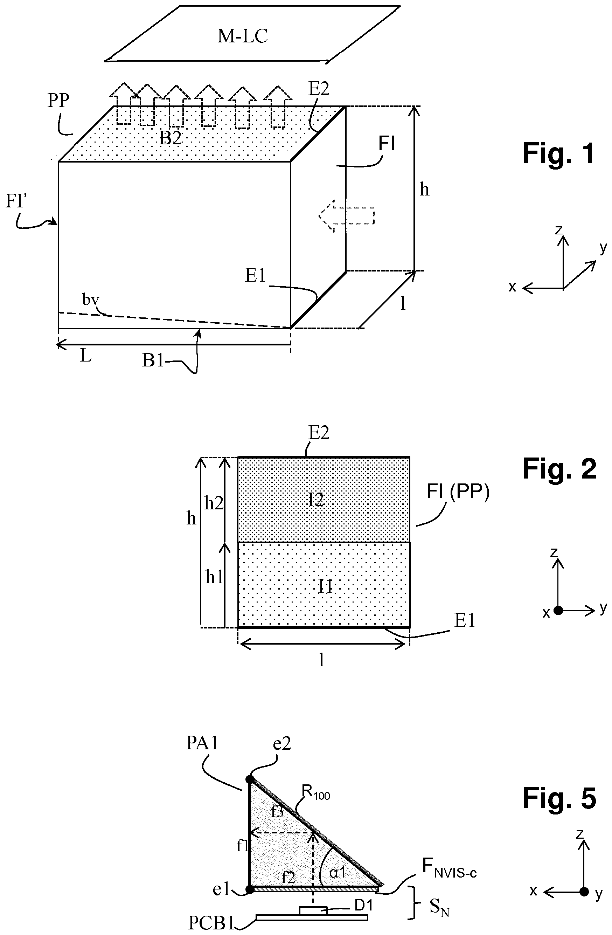

Les figures 1 à 10 représentées par rapport à un repère orienté de référence (x,y,z), illustrent un agencement général et des formes des différents éléments d'un dispositif d'éclairage selon l'invention. Elles ne rendent pas compte des dimensions réelles respectives des différents éléments. D'une figure à l'autre, des changements d'échelle pour un ou tous les éléments ont pu être utilisés pour faciliter la compréhension.

Un guide de lumière selon l'invention comprend un pavé principal PP, qui est schématiquement représenté sur la figure 1. Le pavé principal PP correspond à un prisme droit à base rectangulaire, dont les dimensions I x L du rectangle de base (avec I ≤L) sont définies pour être au moins égales, et généralement plus grandes que celles de la matrice M-LC à rétro-éclairer (matérialisée de façon symbolique sur la figure 1 par une surface rectangle), et dont la distance entre les bases correspond à l'épaisseur ou hauteur, du pavé. Cette épaisseur est généralement constante, mais on verra plus loin, que dans certains cas, pour favoriser une extraction plus progressive de lumière, cette épaisseur peut varier le long de l'axe x, correspondant à une découpe en biseau à l'arrière du pavé (ligne de découpe v en pointillé sur la figure 1). La dimension L suivant l'axe x correspond à la direction longitudinale du pavé, qui dans l'invention est la direction d'injection de lumière dans le pavé, par une face latérale d'injection notée FI, appelée face d'entrée dans la suite. La dimension I est suivant l'axe y et correspond à la largeur de la face d'entrée Fl. Dans la suite, on se place dans le cas général de bases rectangulaires avec I≤ L, où I et L correspondent respectivement au petit côté et au grand côté de rectangle, couvrant le cas particulier de bases carrées. Tout ce qui suit s'applique indifféremment à une épaisseur constante ou variable. L'invention porte en effet plus particulièrement sur comment réaliser deux voies d'injection optique indépendantes sur une même face d'entrée du pavé principal, qui a la hauteur h.

A titre indicatif, l'épaisseur h du pavé (lame mince) est généralement de quelques millimètres (3 ou 4 millimètres par exemple), tandis que la largeur I et la longueur L dépendent comme on l'a vu de la surface de matrice à rétro-éclairer, et varient de quelques centimètres pour des petites matrices, à plusieurs dizaines de centimètres pour les plus grandes.

L'agencement du pavé PP par rapport à la matrice à cristaux liquides à rétro-éclairer M-LC correspond à l'état de l'art. Notamment la base supérieure B2 est une face diffusante (par exemple dépolie) qui est placée immédiatement sous la face arrière de la matrice M-LC. Elle constitue la face de sortie du guide de lumière, par laquelle la lumière issue de la source d'éclairage active (diurne ou nocturne, en fonction du mode de vision courant) qui est injectée dans une direction longitudinale par une face latérale du pavé, et diffusée de manière la plus homogène possible sur toute la face arrière de la matrice à cristaux liquides. La base inférieure B1 et les trois autres faces latérales sont des faces réfléchissantes (c'est-à-dire à albédo élevé). Ces faces sont par exemple polies, ou recouvertes d'un film blanc. Par ailleurs, on cherche à avoir une bonne uniformité de la lumière diffusée en sortie du guide de lumière. Cela peut être obtenu par une technologie de guide de lumière qui permet l'intégration dans la masse de particules diffusantes. Mais de préférence, on utilise un pavé conçu pour présenter un gradient dans la direction d'injection de la lumière. Des détails sur ce type de pavés sont donnés plus loin dans la description.

Le guide de lumière selon l'invention est conçu pour une injection latérale de lumière par une seule face latérale du pavé droit PP, qui est celle notée FI dans les dessins. Dans l'exemple, c'est une face qui s'étend en hauteur h (entre les deux bases) sur la largeur I qui correspond aux petits côtés (I) de rectangle des bases. Mais l'invention s'applique de la même façon, lorsque la face d'entrée choisie est une face qui s'étend sur la largeur L correspondant aux grands côtés (L) des bases (il suffit d'inverser les rôles de I et L dans la suite des explications).

Selon l'invention, et comme illustré sur la figure 2, la face d'entrée FI est structurée en deux fenêtres d'injection I1 et I2 définies sur la hauteur h (axe z), définissant une fenêtre d'injection par source d'éclairage. Les deux fenêtres d'injection I1 et I2 ont des hauteurs respectives h1 et h2 et s'étalent de préférence sur toute la largeur I de la face FI. Elles sont obtenues en utilisant au moins un prisme auxiliaire de type prisme droit à base triangle rectangle et qui est utilisé comme étage d'injection indirecte de lumière par réflexion, pour au moins une source d'éclairage associée, selon la mise en oeuvre de l'invention. Plus précisément, selon la mise en oeuvre de l'invention, la réflexion par le prisme auxiliaire est une réflexion dans le prisme (la lumière émise par la source est transmise à l'intérieur du prisme), et dans ce cas une fenêtre d'injection (indirecte) correspondante est la surface de face d'entrée principale qui est couverte par une des faces latérales à angle droit, non réfléchissante, du prisme auxiliaire qui est rapportée plan sur plan sur cette face d'entrée principale ; ou bien il s'agit d'une réflexion sur le prisme auxiliaire (la lumière émise par la source ne pénètre pas dans le prisme) et dans ce cas une fenêtre d'injection (indirecte) correspondante est la surface de face d'entrée principale correspondant à une projection orthogonale de la face réfléchissante qui est agencée dans un plan incliné face à la face d'entrée principale. L'autre fenêtre d'injection peut être la surface restante, et alors elle est utilisée en mode d'injection directe de lumière pour l'autre source d'éclairage. Ou bien elle est définie comme la première fenêtre d'injection, par un prisme auxiliaire respectif ou bien une face réfléchissant de prisme auxiliaire respective, utilisée en mode d'injection indirecte de lumière par réflexion. Ces différentes possibilités seront expliquées en détail à l'aide des figures.

L'invention permet de définir deux voies optiques indépendantes sur la hauteur de pavé et chaque voie peut ainsi être optimisée, sans avoir à tenir compte de contraintes ou caractéristiques d'émission de l'autre voie.

Pour une injection la plus efficace, optimisant la surface d'injection utile sur le pavé, on prévoit que les deux fenêtres d'injection couvrent à elles deux la surface complète I x h de la face d'entrée principale FI (du pavé principal).

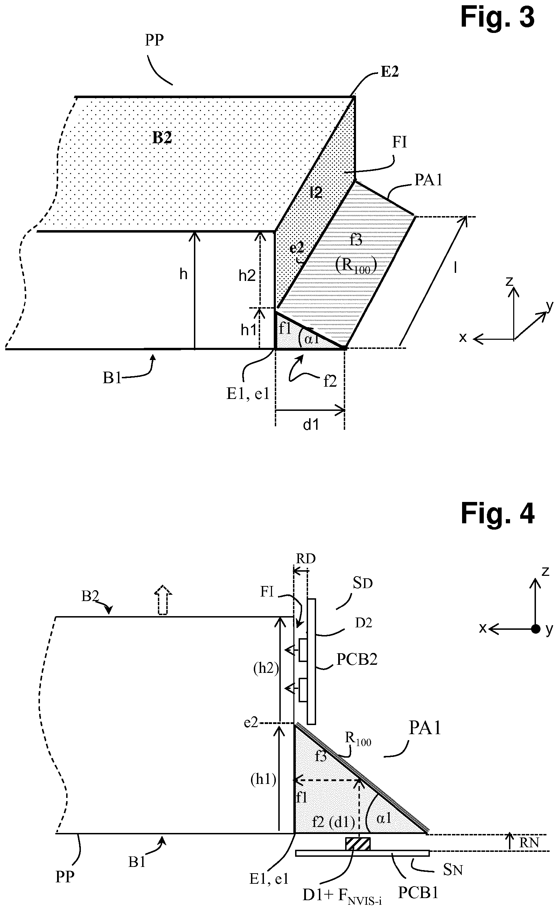

Les figures 3 et 4 illustrent une première mise en oeuvre de l'invention, dans laquelle un seul prisme auxiliaire PA1 est utilisé pour définir les deux fenêtres d'injection sur la face d'entrée principale. Les deux faces latérales à angle droit servent l'une de face d'entrée et l'autre de face de sortie. On note f1 celle qui est utilisée comme face de sortie, et qui est accolée plan sur plan à la face d'entrée FI : elle définit (délimite) la première fenêtre d'injection I1 qui correspond à la surface couverte. Cette zone I1 s'étend donc sur la face d'entrée FI sur une hauteur h1 (axe z) qui correspond à la distance entre l'arête e1 du prisme auxiliaire entre les deux faces latérales à angle droit f1 et f2, et l'arête e2 du prisme auxiliaire, entre la première face latérale f1 et la troisième face latérale f3). La zone I1 s'étend selon l'axe y de préférence sur toute la largeur I de la face Fl. C'est-à-dire que la hauteur (ou épaisseur) du prisme auxiliaire, qui est la distance entre ses deux bases, correspond de préférence à la largeur I de la face d'entrée du pavé.

De préférence pour optimiser l'utilisation de la surface d'entrée FI sur le pavé principal pour l'injection de lumière, le prisme PA1 est accolé sur cette face FI, bord à bord sur deux côtés avec la face d'entrée du pavé principal, comme illustré. Notamment l'arête e1 entre les deux faces f1 et f2 du prisme PA1 est alignée (coïncide) avec l'arête E1 du pavé PP, entre la base B1 et la face d'entrée Fl. Mais on aurait tout aussi bien pu l'aligner sur le bord opposé, avec l'arête E2 du pavé entre la base supérieure B2 et la face d'entrée Fl.

Le prisme auxiliaire PA1 définit (délimite) aussi la deuxième fenêtre d'injection I2 sur la face d'entrée Fl, qui est la surface restante (non couverte) sur cette face FI, entre le prisme auxiliaire et l'autre bord (arête) du pavé. Cette deuxième zone I2 s'étend dans l'exemple sur une hauteur h2 qui correspond à la distance entre l'arête e2 du prisme auxiliaire PA1 jusqu'à l'arête E2 du pavé PP.

Cette première mise en oeuvre conduit à un dispositif d'éclairage dans lequel une source d'éclairage est associée à la première fenêtre d'injection I1 de la face d'entrée du pavé droit principal, pour une injection "indirecte" de lumière par réflexion dans le prisme auxiliaire, tandis que l'autre source est associée à la deuxième fenêtre d'injection I2 pour une injection "directe" de lumière sur cette face d'entrée FI, dans la direction longitudinale du pavé.

On associe de préférence la deuxième fenêtre d'injection, "directe" à la source diurne S_{D}, car c'est ce mode qui demande beaucoup de puissance lumineuse. La figure 4 montre un agencement correspondant des sources d'éclairage et du guide de lumière. La carte support PCB2 de la source diurne S_{D} est disposée dans un plan parallèle face à la deuxième fenêtre d'injection I2, de préférence de façon centrée et le plus près possible, pour que la surface de zone I2 capte au maximum le rayonnement diurne (divergence des diodes). La source diurne se trouve ainsi disposée sur le côté du pavé, dans le prolongement du pavé, dans la direction longitudinale, dans la hauteur h2.

La source d'éclairage nocturne S_{N} est associée au prisme auxiliaire PA1, pour une injection indirecte, par réflexion dans le prisme, vers la zone I1 d'injection sur la face d'entrée Fl. La carte support PCB1 de cette source est disposée dans un plan parallèle face à la face d'entrée f2 du prisme auxiliaire, de préférence de façon centrée et le plus près possible pour permettre la transmission du maximum de rayonnement (divergence des diodes). La lumière issue de la source S_{N} arrive selon une direction orthogonale (selon y) au plan de face f2 ; elle est réfléchie dans la direction longitudinale du pavé principal (selon x) vers la fenêtre d'injection correspondante I1 (face de sortie f1), par la troisième face latérale f3 du prisme auxiliaire qui est 100% réfléchissante (face miroir). La face f3 a pour cela un revêtement de surface R₁₀₀ qui est déposé (laminé) ou rapporté par collage sur cette face f3. Par exemple et non limitativement, la structure R₁₀₀ est un ensemble de couches minces métalliques ou diélectriques.

Les deux sources d'éclairage sont disposées chacune sur une carte support propre (PCB1 pour S_{N}, PCB2 pour S_{D}), qui sont dans des plans orthogonaux l'une par rapport à l'autre. Comme indiqué, chaque carte support est placée de préférence au plus près de la face d'entrée respective, à une distance de montage qui tient compte des contraintes de montage mécanique, de dissipation thermique et de connectique, imposées par le cahier des charges de l'application. En pratique cette distance de montage (_{RD} pour la source diurne, RN pour la source nocturne) ne dépasse pas quelques millimètres, et est généralement comprise entre 0,2 à 2 millimètres.

Pour chaque source (dans chaque voie optique), l'agencement et le nombre de diodes, et la distance de montage ne dépendent que des caractéristiques des diodes utilisées pour cette source (puissance, dimensions, cône d'émission), de la surface de diffusion disponible sur la face d'entrée respective (dans l'exemple, I x h2 pour la zone I2 associée à la source diurne, et I x h1, pour la face f2 associée à la source nocturne) et des contraintes de montage (mécanique, thermique, de connectique) à l'emplacement concerné.

Chaque voie optique peut donc être optimisée (centrage, distance de montage, agencement et nombre de diodes) indépendamment de l'autre voie, pour permettre la transmission optimale de puissance lumineuse vers/dans le pavé principal.

L'agencement proposé en plus d'être compact et peu coûteux, est aussi favorable en termes de dissipation thermique et d'aspect de connectique, notamment pour la connexion à d'autres cartes (électronique de commande).

En pratique les dimensions du prisme auxiliaire PA1 dépendent des dimensions de la face d'entrée principale Fl. La largeur I de la face d'entrée FI définit l'épaisseur ou hauteur maximale (utile) du prisme auxiliaire, entre ses deux bases triangles, et par suite la longueur des faces rectangles f1, f2 et f3. De préférence, l'épaisseur du prisme est choisie égale à cette valeur I, pour avoir une fenêtre d'injection I1 correspondante la plus large possible. La hauteur h de la face d'entrée FI détermine les hauteurs respectives h1 et h2 des deux fenêtres d'injection I1 et I2. Il n'y a pas d'obligation à ce que les valeurs h1 et h2 soient égales, mais elles peuvent l'être (eg. Figure 4). Ces valeurs sont telles que pour chaque source, on peut positionner (centrer) au moins une rangée de diodes en face de la face d'entrée respective principale (source diurne) ou auxiliaire (source nocturne). Lorsque les hauteurs h1 et h2 ne sont pas égales (eg. Figure 3), le rapport de la plus grande à la plus petite ne sera généralement pas supérieur à 2, et la plus grande sera généralement celle associée à la source diurne, pour laquelle on souhaite intégrer le plus de diodes possibles pour disposer d'un maximum de puissance lumineuse.

S'agissant de l'angle α1, il est en principe égal à 45 degrés (π/4), mais on peut avantageusement l'ajuster, à quelques degrés en plus ou en moins, en jouant sur la largeur d1 de la face f2, pour tenir compte des caractéristiques des cônes d'émission des diodes électroluminescentes utilisées (ou plus généralement des éléments émissifs utilisés) dans le but d'optimiser la répartition de la lumière sur la face de sortie auxiliaire f1. C'est-à-dire que l'on peut optimiser l'orientation de la surface réflective en fonction des caractéristiques de la source (des diodes), permettant de ramener les faisceaux les plus divergents (de la source) vers l'axe central longitudinal du pavé principal. La valeur type de l'angle α1 est 45 degrés, correspondant à h1 =d1. Si il faut augmenter un peu l'angle, on va alors diminuer un peu d1, et inversement. Autrement dit, on a d1 =h1 ±δ1.

Pour des pavés de quelques millimètres d'épaisseur, d1 et h1 valent quelques millimètres (par exemple 2 à 3 millimètres), et δ1 est soit nul, ou égal à quelques dixièmes de millimètres. Donnons quelques exemples numériques (non limitatifs). Dans un premier exemple, le pavé PP a 4 millimètres d'épaisseur (h), et les hauteurs h1 et h2 font 2 millimètres chacune. Pour une valeur α1 de 45 degrés, on a alors d1 =h1 =2 mm (fonction tangente). Si pour une application donnée, en fonction des diodes utilisées, on souhaite ajuster α1 à 42 degrés, alors on fixera d1 à 2,22 millimètres. Dans un autre exemple, le pavé PP a 6 millimètres d'épaisseur, h1 fait 2 millimètres et h2 fait 4 millimètres. Ce ratio choisi peut permettre une densification du tapis de diodes diurnes, par exemple avec un arrangement des diodes en quinconce. Si une valeur d'angle optimale pour α1 est 48 degrés, alors la valeur de d1 est fixée à 1,80 millimètre.

S'agissant du montage des sources, chaque source est montée sur une carte support qui lui est propre, à une distance de montage la plus proche possible, et de façon centrée par rapport à la face d'entrée respective, pour obtenir la meilleure répartition de lumière sur cette face d'entrée, avec le moins de pertes de puissance lumineuse possible. En pratique, si on utilise des diodes D2 (source diurne) qui sont individuellement encapsulées (boîtier individuel de protection), et pour les valeurs h1 et h2 indiquées en exemple, on aura pour la source diurne, au moins une rangée sur la hauteur h2 de la fenêtre d'injection I2. Dans chaque rangée, les diodes D2 s'étendent (sont alignées) sur la largeur I de la zone I2. Comme on cherche ici une densité de diodes maximales, on peut envisager plus de rangées, au moins 2 avec un arrangement des diodes en quinconce, ce qui dépend de la valeur de h2, et des diodes utilisées (dimension, espacement minimal imposé). A noter qu'on peut utiliser des puces de diodes nues, plutôt que des diodes encapsulées plus encombrantes (boîtier individuel de protection). La source nocturne est centrée par rapport à la surface d1 x I de la face d'entrée auxiliaire f2 (figure 4). Elle peut comprendre une seule diode D1, mais on peut prévoir également une rangée de diodes D1, alignées sur la longueur I de la face f2.

La figure 5 illustre un perfectionnement applicable à la voie optique nocturne, permettant d'en réduire le coût de fabrication et contribuant à améliorer la compacité du dispositif. Dans ce perfectionnement, on remplace le capuchon de filtrage NVIS F_{NVIS-i} (Figure 4), qui doit être rapporté individuellement par-dessus les ou des diodes D1 de la source nocturne (diodes blanches, ou diodes rouges), par un filtre collectif réalisé sur la face d'entrée f2 sur le prisme auxiliaire. Un tel filtre collectif NVIS-c peut être réalisé en pratique par un dépôt ou un collage d'une structure de couches minces diélectriques sur cette face. On réduit le coût de réalisation (procédé collectif et dépôt de couches minces versus capuchon individuel rapporté), et on peut monter la source nocturne plus près de sa face d'entrée respective, ce qui est favorable à la transmission lumineuse (moins de pertes).

Cette première mise en oeuvre impose une intégration mécanique d'une carte support de source à la verticale (par rapport à un plan de matrice LC horizontal), et une intégration mécanique d'une autre carte support de source à l'horizontal, ce qui n'est pas toujours optimal en termes de dissipation thermique et de connectique de l'ensemble du dispositif.

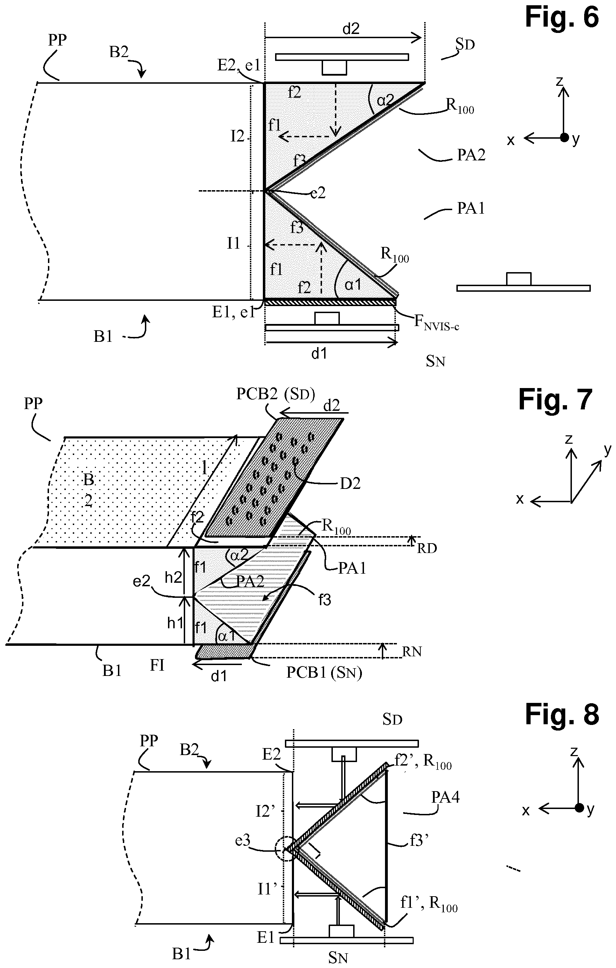

Les figures 6 et 7 illustrent une deuxième mise en oeuvre de l'invention, qui permet un montage des deux cartes support de source à l'horizontal dans des plans parallèles superposés, de part et d'autre du guide. Chaque fenêtre d'injection est ici définie sur la face d'entrée FI par un prisme auxiliaire respectif, et chaque prisme auxiliaire sert d'étage d'entrée pour une source d'éclairage associée.

Dans l'exemple illustré, la source d'éclairage nocturne est associée au prisme auxiliaire PA1 et agencée du même côté que la base inférieure B1 du pavé principal PP ; et la source d'éclairage diurne est associée au prisme auxiliaire PA2 et agencée du même côté que la base supérieure B2. Mais, on pourrait tout aussi bien avoir la disposition inverse.

La forme générale du prisme auxiliaire PA2 et la fonction des faces latérales (entrée, sortie, réfléchissante) pour la source d'éclairage associée sont les mêmes que celles du prisme auxiliaire PA1 décrit dans la première mise en oeuvre. Aussi a-t-on utilisé dans les dessins les mêmes références pour désigner les faces latérales (f1, f2, f3) et les arêtes (e1, e2) des prismes auxiliaires PA1 et PA2. Les dimensions respectives du prisme PA2 sont h2, d2 et I, et celles du prisme PA1 sont h1, d1 et I, où I correspond à la largeur de la face d'entrée FI du pavé principal, et définit la hauteur maximale de chacun des prismes auxiliaires, qui est aussi la longueur de leurs faces f1, f2, f3. Chaque source est placée de manière centrée par rapport à la face d'entrée auxiliaire f2 respective, sur le prisme auxiliaire associée. Ici, par rapport à la première mise en oeuvre, l'arrangement et le nombre de diodes D2 de la source diurne est défini par rapport à la surface I x d2 de la face d'entrée auxiliaire f2 du prisme PA2. Dans l'exemple on a figuré trois rangées de diodes avec un arrangement quinconce, ce qui peut correspondre à l'utilisation de puces nues.

De préférence, les deux prismes sont disposés sur la face d'entrée FI du pavé principal de manière à utiliser efficacement toute la surface disponible pour l'injection de lumière : Cela définit la hauteur des prismes PA1 et PA2, égale à I ; et de préférence, on utilise toute la hauteur de la face d'entrée principale (du pavé PP). Les faces f1 des prismes sont ainsi disposées côte à côte sur la face FI de sorte que la deuxième arête e2, entre leurs faces f1 et f3, est commune aux deux prismes. La fenêtre d'injection I1 s'étend sur la face d'entrée FI sur la hauteur h1 définie par la distance entre les deux arêtes e1 et e2 du prisme, de préférence en partant du bord du pavé : dans l'exemple l'arête e1 coïncide avec l'arête E1 du pavé principal (montage bord à bord). Et de manière similaire, la fenêtre d'injection I2 délimitée par le prisme auxiliaire PA2 s'étend sur la face d'entrée FI sur une hauteur h2 entre les arêtes e1 et e2 du prisme PA2, et de préférence en partant du bord de pavé (montage bord à bord, arêtes e1 et E2 confondues).

Les dimensions h2, d2 et α2 du prisme PA2 sont définies ou contraintes de la même façon que les dimensions h1, d1 et α1 du prisme auxiliaire PA1. C'est-à-dire que tout ce qui a été dit précédemment à ce sujet sur PA1 en relation avec les figures 3 à 5, s'applique de la même façon pour PA2. Notamment, on peut ajuster la valeur d'angle entre les faces f2 et f3 pour chaque prisme auxiliaire pour optimiser la répartition de lumière en entrée de pavé. On ajuste pour cela les largeurs des faces d'entrée f1 (d1 pour PA1, d2 pour PA2). C'est-à-dire que l'on a d1 =h1 ±δ1 et d2=h2±δ2. Si les valeurs hi sont égales à quelques millimètres, par exemple comprises entre 2 et 4 mm, δi vaut de zéro (αi=45 degrés) à quelques dixièmes de millimètres (ajustement de quelques degrés). On peut se reporter aux exemples numériques donnés pour la première mise en oeuvre. Comme précédemment, chaque voie d'éclairage, diurne et nocturne, peut ainsi être optimisée séparément en fonction de l'application et des diodes utilisées, en fonction de la distance de montage et des dimensions du prisme auxiliaire respectif.

Sur le plan de la réalisation pratique d'un guide de lumière selon la première ou la deuxième mise en oeuvre, il y a différentes possibilités. La forme du guide de lumière incluant la forme de pavé principal et celle d'au moins un prisme auxiliaire, voire les deux, peut être réalisée d'une pièce (moulage, gravure). Par exemple, et non limitativement, on peut réaliser:
- une forme de pièce monolithique (moulage, gravure) pour le pavé principal et un prisme auxiliaire. Cette pièce peut être utilisée dans un dispositif d'éclairage selon la première mise en oeuvre ; et pour les besoins d'une autre application, on peut compléter la pièce en rapportant par collage un deuxième prisme correspondant à la deuxième mise en oeuvre.
- une forme de pièce monolithique (moulage, gravure) pour le pavé principal et deux prismes auxiliaires correspondant à la deuxième mise en oeuvre.
- une forme de pavé droit et une forme monolithique correspondant aux deux prismes auxiliaires agencés sur un socle en forme de pavé droit très court (selon l'axe longitudinal, x) de dimensions I et h correspondant à celles du pavé principal, et permettant un report plan sur plan du socle sur la face d'entrée principale d'un pavé.

La figure 8 illustre une variante de réalisation de la mise en oeuvre correspondant aux figures 6 et 7, qui utilise un agencement identique des cartes support des sources, mais avec un unique prisme auxiliaire PA4, à deux faces réfléchissantes : ces deux faces sont les deux faces latérales à angle droit du prisme, notées f1' et f2', et leur emplacement dans l'agencement correspond à l'emplacement des faces f3 réfléchissantes des prismes PA1 et PA2 de la figure 6. La forme PA4 correspond en quelque sorte à la forme complémentaire qui s'emboîte dans la forme formée par les deux prismes PA1 et PA2 de la figure 6, pour obtenir un pavé. Dans cette variante, les deux faces f1' et f2' sont alors chacune recouvertes d'un revêtement de surface R100 réfléchissant.

Dans cette variante, l'éclairement émis par les sources d'éclairage ne traverse pas le prisme auxiliaire : il est reçu directement par la face réfléchissante du prisme auxiliaire, et réfléchi par cette face vers la fenêtre d'injection respective. Ici, les fenêtres d'injection respectives, I1 et I2, correspondent chacun à la surface de projection orthogonale sur la face d'entrée principale, de la face réfléchissante correspondante du prisme auxiliaire. La limite entre les deux fenêtres correspond à la position de l'arête e3 entre les deux faces réfléchissantes f1' et f2'.

En pratique, on prévoit que dans le plan de surface de la face d'entrée principale, la surface de prisme a une certaine largeur, pour assurer la résistance mécanique du guide. Si le pavé et le prisme sont assemblés par collage, cela peut s'obtenir par exemple, en usinant ou moulant une forme de prisme auxiliaire telle que l'arête e3 de prisme auxiliaire est non pas pointue, mais présente une petite surface plane (chanfrein) ; ou bien en usinant ou moulant une forme de pavé de manière à avoir une encoche en v correspondant à l'arête, pour permettre l'emboîtement (figure 8).

Par ailleurs la face qui reçoit le rayonnement émis par la source nocturne (f1' dans l'exemple) comporte de préférence et comme illustré, une structure de couches minces diélectriques réalisant un filtre optique collectif F_{NVIS-c}. Le choix des couches pour réaliser le filtre interférentiel diffère de celui des agencements des figures précédentes, car le filtre est ici traversé deux fois : une première fois sur le chemin optique de la source nocturne vers la face réflective ; et une deuxième fois sur le chemin optique depuis la face réflective vers la face d'entrée sur le pavé principal. Ce filtre s'ajoute au revêtement de surface réfléchissant R₁₀₀. On notera que l'on peut avantageusement réaliser un revêtement de surface diélectrique qui réalise à la fois la fonction miroir et la fonction de filtrage NVIS voulue (Miroir diélectrique à réflexion spectrale). Ou bien on dépose des couches diélectriques réalisant la fonction de filtre optique NVIS sur les couches métalliques du revêtement réfléchissant.

Dans les réalisations de l'invention qui viennent d'être décrites en référence aux figures 3 à 8, les deux sources d'éclairage sont agencées dans le dispositif d'éclairage chacune sur une carte support propre, ce qui suppose un montage mécanique propre.

Une troisième mise en oeuvre de l'invention permet notamment de rendre l'agencement du guide de lumière et des sources plus compact, et de faciliter la prise en compte des contraintes de dissipation thermique et de connectique, car elle permet d'intégrer les deux sources sur une même carte support.

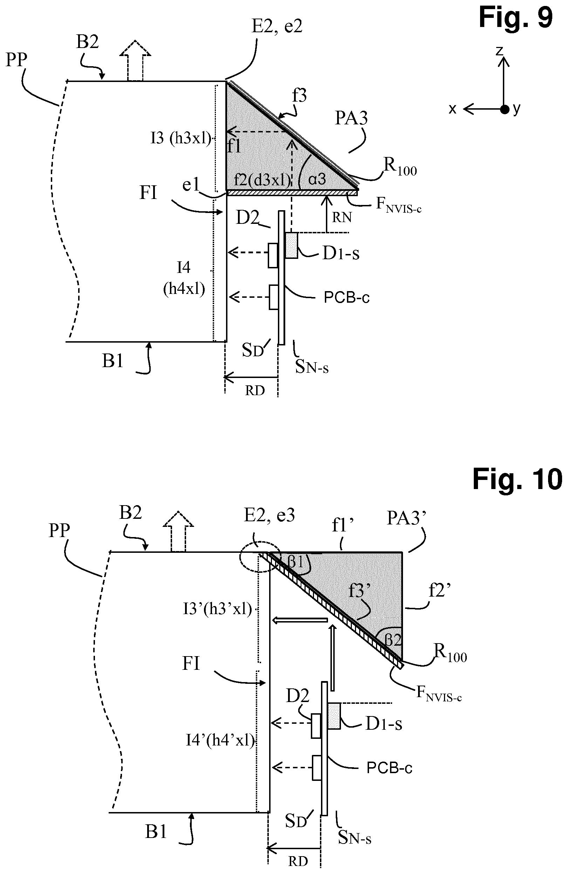

Cette mise en oeuvre est illustrée sur la figure 9. Un seul prisme auxiliaire est utilisé, que l'on note PA3, qui est accolé plan sur plan sur la face d'entrée FI du pavé principal, avec un positionnement tel que c'est l'arête e1 entre les faces f1 et f2 du prisme PA3 qui délimite en hauteur les deux fenêtres d'injection (et non pas l'arête e2, entre les faces f1 et f3, comme dans les deux premières mises en oeuvre). On rappelle que dans toute la description et donc y compris ici, les notations f1, f2, f3, e1 et e2 ont les mêmes significations dans chacun des prismes auxiliaires. Pour les dimensions que l'on peut ajuster, on utilise des notations spécifiques : d1 et α1 pour PA1 (figures 3 à 7), d2 et α2 pour PA2 (figures 6 et 7) et d3 et α3 pour PA3 (Figure 8). On note les deux fenêtres d'injection formées par le prisme PA3, à savoir, I3 de hauteur h3, et I4 de hauteur h4. Ici ces fenêtres sont définies par un agencement différent du prisme auxiliaire par rapport au pavé.

Dans l'exemple illustré, le prisme PA3 est disposé du côté de la base supérieure B2, de façon que l'arête e2 entre ses faces f1 et f3 coïncide avec l'arête E2 (ou soit proche de E2) du pavé principal (entre B2 et Fl). Ainsi positionné, la face f1 du prisme auxiliaire PA3 définit une fenêtre d'injection I3 qui s'étend sur une hauteur h3 correspondant à la largeur de cette face f1, entre les arêtes e1 et e2, et de préférence comme illustré en partant du bord du pavé (depuis l'arête E2). L'arête e1 définit la limite avec la deuxième fenêtre d'injection I4 qui est la surface restante sur la face Fl, c'est à dire laissée libre par le prisme PA3. Cette zone I4 s'étend sur une hauteur h4, depuis le niveau de l'arête e1 jusqu'à l'autre bord du pavé (E1, B1).

Cette troisième mise en oeuvre de l'invention permet de placer les deux sources d'éclairage sur une même carte support PCB-c. Cette carte peut être positionnée dans la hauteur h4 libre sous la face d'entrée auxiliaire f2 du prisme PA3 et dans un plan parallèle et face à la deuxième fenêtre d'injection I4 définie sur la face d'entrée FI du pavé, une première source d'éclairage étant montée en face avant de la carte support directement face à la fenêtre d'injection I4, pour une injection directe sur la face d'entrée principale, et la deuxième étant montée en face arrière pour une injection indirecte via le prisme auxiliaire, dans la fenêtre d'injection I3 définie sur la face d'entrée principale. C'est-à-dire que l'on gagne en compacité, la carte support commune (avec les deux sources) pouvant être intégrée dans le prolongement du pavé, verticalement, dans la hauteur h4 sous le prisme auxiliaire.

S'agissant du montage des sources, on retrouve les aspects de centrage et distance de montage décrites pour les précédentes mises en oeuvre. La première source d'éclairage en face avant de la carte support commune PCB-c, est disposée (son tapis de diodes) de façon avantageusement centrée par rapport à la fenêtre d'injection I4 (I x h4) sur la face d'entrée Fl, le plus près possible de cette face Fl, en fonction des contraintes de montage (mécanique, thermique, connectique). La première source d'éclairage est de préférence la source diurne car l'injection directe minimise les pertes de puissance lumineuse, et les diodes sont du type à émission par le haut, plus optimale en termes de puissance lumineuse.

La deuxième source d'éclairage, qui sera donc généralement la source nocturne, est disposée en face arrière de la carte support commune. Elle utilise une ou des diodes D1-s à émission latérale, qui émettent dans une direction parallèle au plan de carte support. On peut avoir une seule diode D1-s et alors elle est positionnée en face arrière de la carte support de façon centrée par rapport à la face d'entrée auxiliaire f2 du prisme PA3 ; mais on peut envisager une rangée de diodes D1-s positionnée de façon centrée par rapport à la largeur d3 de la face f2, avec un alignement de diodes sur la longueur I de la face d'entrée auxiliaire f2.

Comme dans les autres mises en oeuvre, l'angle α3 entre les faces f2 et f3 du prisme PA3 a une valeur type de 45 degrés qui peut être ajusté de quelques degrés en plus ou en moins, en jouant sur la largeur d3 de face f2 du prisme PA3, pour obtenir une répartition homogène de la lumière émise par la source S_{N-s} sur toute l'étendue de fenêtre d'injection I3 définie sur la face d'entrée principal Fl. Egalement et comme illustré, on peut réaliser le filtrage NVIS au moyen d'un filtre collectif F_{NVIS-c} sur la face d'entrée auxiliaire f2 (structure R₁₀₀).

Enfin, on peut tout aussi bien placer le prisme auxiliaire du côté de la base inférieure B1 (toutes choses égales par ailleurs). L'homme de l'art saura faire les transpositions correspondantes. Le choix de l'agencement par rapport aux bases B1 et B2 dépend principalement des contraintes de montage pour l'intégration verticale des sources (mécanique, thermique, connectique).

Dans une variante illustrée sur la figure 10, c'est la face f3' qui relie les deux faces à angle droit du prisme auxiliaire PA3' qui est réfléchissante, le prisme étant placé tel que cette face f3' est dans un plan incliné avec et face à la face d'entrée principale Fl. La face f3' définit une première fenêtre d'injection I3' sur la face d'entrée principale FI qui correspond à la surface de projection orthogonale de la face f3'. Dans cet exemple, une des faces à angle droit, f1' sur la figure, prolonge dans le même plan une base du pavé, B2 sur la figure ; et l'autre face à angle droit, f2', est dans un plan parallèle à la face d'entrée du pavé, côté extérieur du guide. Ce qui a été expliqué pour la variante de la figure 8 en ce qui concerne l'aspect résistance mécanique par une forme adaptée du prisme auxiliaire (chanfrein) ou du pavé (encoche) s'applique de la même façon, comme ce qui concerne la réalisation d'un filtre collectif N_{VIS-c}, pour la voie nocturne, sur la face réfléchissante f3'.

Egalement on peut prévoir un ajustement d'angles de prisme auxiliaire pour optimiser la répartition de lumière sur la fenêtre d'injection respective I3' sur la face d'entrée du pavé principal. C'est-à-dire que tout ce qui a été expliqué précédemment sur les ajustements d'angle s'applique ici également. Dans l'exemple, on agira sur l'angle entre la face réfléchissante f2' et la face f2' disposée verticalement (dans le plan de de la figure) pour faire cet optimisation.

Quant aux sources d'éclairage diurne et nocturne, elles sont agencées de la même manière que pour la réalisation de la figure 9, sur une carte support commune arrangée verticalement dans la hauteur de la deuxième fenêtre d'injection, qui correspond à la surface restante sur la face d'entrée principale. Dans cet agencement de la figure 10, comme pour celui de la figure 8 : la lumière émise par la source associée (la source nocturne de préférence, comme illustré) ne traverse pas le prisme auxiliaire ; c'est-à-dire que l'on a une injection indirecte de lumière (nocturne) dans le pavé par réflexion sur le prisme (et non pas dans le prisme comme pour les autres réalisations des figures 3 à 7 et 9).

Quel que soit le mode de réalisation implémenté, le guide de lumière selon l'invention est facilement réalisé par des techniques de l'art. Il peut notamment être réalisé en une pièce, par usinage de verre (polissage, gravure) ou moulage d'un matériau plastique optique. Le revêtement réfléchissant R₁₀₀ de la face f3 (solution à un prisme auxiliaire) ou des faces f3 (solution à deux prismes auxiliaires), et le filtre collectif NVIS sur la face f2 du prisme auxiliaire associé à la source nocturne sont réalisés ensuite, par des techniques de dépôt de couches minces. On peut également prévoir de réaliser séparément les différents éléments (le pavé principal et le ou les prismes auxiliaires du guide) dans des matériaux identiques ou compatibles, puis d'assembler ces éléments par collage. On en a donné quelques exemples au cours de la description. Ces exemples et les variantes qui en découlent sont du domaine de l'invention. En fonction des techniques de fabrication, on peut avoir des variations sur les dimensions ou sur les positions relatives des différents éléments (pavé principal, prisme(s) auxiliaire(s)).

Ensuite les sources d'éclairage et le guide de lumière sont assemblés mécaniquement pour former le dispositif d'éclairage selon l'invention, en respectant les contraintes de montage et centrage. Cet assemblage utilise des techniques usuelles de l'état de l'art.

S'agissant du pavé principal, il doit permettre d'obtenir une bonne homogénéité de la diffusion de la lumière. On pourrait réaliser le pavé en utilisant une technologie par laquelle des microparticules diffusantes sont intégrées dans la masse. Mais la diffusion obtenue avec une injection latérale n'est généralement pas optimale.

Pour obtenir en sortie du guide, une lumière de rétro-éclairage optimale en terme de puissance et d'homogénéité, quelle que soit la voie active (diurne ou nocturne), on utilisera avantageusement un pavé principal du type à gradient d'extraction de lumière dans une direction longitudinale correspondant à la direction d'injection de la lumière par une des faces latérales du pavé, permettant d'homogénéiser l'extraction sur la longueur de pavé.

De tels pavés sont connus de l'homme de l'art. Par exemple, le pavé comprend des microstructures formées par traitement de surface (face inférieure et/ou face supérieure) ou bien dans la masse, et la taille des microstructures et/ou l'espacement entre elles varient pour obtenir le gradient d'extraction souhaité dans la direction d'injection. La fonction de ces microstructures est de faire une rupture de géométrie ou d'interface air/matériau transparent du pavé. Les microstructures peuvent être par exemple (et non exhaustivement) des micro stries orientées orthogonalement par rapport à la direction d'injection de lumière, et d'autant plus rapprochées, que l'on s'éloigne de la face d'entrée latérale ; des micro-points déposés par sérigraphie de peinture diffusante en face arrière ; des micro-trous (ou "bumps") en surface ; ou encore des micro-prismes en face avant. Dans ce cas la fonction de gradient est synthétisée par les variations de taille et/ou de position des microstructures. On peut également réaliser un gradient d'extraction en variant l'épaisseur du pavé sur sa longueur. Par exemple, on peut tailler en biseau la face arrière du pavé (option matérialisée sur la figure 1 par la ligne en pointillé référencée bv).

Dans ce cas la face d'entrée latérale principale, utilisée pour l'injection, a la hauteur h du pavé initiale, et cette hauteur diminue progressivement quand on s'approche de la face latérale opposée. On peut aussi combiner une variation d'épaisseur sur la longueur du pavé avec des microstructures.

L'invention est également compatible de l'utilisation de technique de contrôle en courant de chaque diode individuellement (*local dimming*) notamment pour la voie diurne.

Egalement, pour les réalisations décrites dans lesquelles la lumière est injectée indirectement, par réflexion dans un prisme auxiliaire (Figures 3 à 7 et 9), on peut améliorer le couplage/compenser l'allongement du chemin optique dû à la traversée du prisme en ajoutant de préférence sur la face d'entrée ou de sortie du prisme un film à micro-prismes, connu sous la terminologie BEF (acronyme anglo-saxon de "*Brightness Enhancement Film*)*,* dans le but de resserrer le faisceau de lumière dans la direction de l'épaisseur du guide.

Enfin, un dispositif de lumière intégrant un guide de lumière selon l'invention est adapté comme on l'a vu à des sources de lumières à diodes électroluminescentes, qui peuvent être des diodes blanches, mais aussi des diodes électroluminescentes colorées, typiquement rouges, vertes et bleues, qui permettent d'obtenir une meilleure colorimétrie.

On note comme principaux avantages d'un dispositif d'éclairage à deux modes de vision diurne et nocturne compatible NVIS selon l'invention :
- une grande compacité. Notamment, l'épaisseur de l'ensemble prisme(s) auxiliaire(s) et sources n'est pas tellement différente de l'épaisseur du pavé principal ;
- une intégration mécanique facilitée y compris sur le plan de la gestion thermique et de la connectique (vers d'autres cartes) ;
- une indépendance optique des deux voies d'émission, qui permet une meilleure optimisation de chaque voie (il n'y a pas à faire de compromis entre les performances des deux voies).

Tous ces avantages contribuent en outre à une réduction du coût global pour la fabrication du guide et l'intégration des sources.

## Revendications

1. Dispositif de rétro-éclairage (1) pour un écran plat de visualisation de type à matrice de cristaux liquide, destiné à être disposé à l'arrière de ladite matrice de cristaux liquide, ledit dispositif étant compatible d'équipement(s) de vision nocturne, qui comporte
- une source d'éclairage diurne (S_{D}) utilisée en mode de vision diurne et formée d'au moins une rangée de diodes électroluminescentes (D_{D}) alignées parallèlement à une direction Y ;
- une source d'éclairage nocturne (S_{N}) utilisée en mode de vision nocturne qui est formée d'au moins une rangée de diodes électroluminescentes (D_{N}) alignées parallèlement à une direction Y, avec un filtre optique apte à rendre la lumière émise par ladite source d'éclairage compatible avec l'utilisation d'équipements de vision nocturne ; et
- un guide de lumière (GL) configuré pour diffuser par une face de sortie principale disposée selon un plan XY, la lumière fournie par la source d'éclairage courante en fonction du mode de vision courant, diurne ou nocturne, ladite lumière étant destinée à éclairer une face arrière de ladite matrice de cristaux liquide,
ladite face de sortie principale correspondant à une base (B2) d'une forme principale de pavé (PP), de type prisme droit à bases rectangulaires, la distance entre les deux bases du pavé définissant une hauteur de pavé; et
- l'assemblage du guide de lumière avec les sources d'éclairage diurne et nocturne étant tel que la lumière émise par chacune des sources est injectée dans une direction longitudinale du pavé par une face latérale du pavé utilisée comme face d'entrée principale (FI) qui est une face latérale du pavé, ladite face latérale utilisée comme face d'entrée principale étant disposée selon un plan YZ perpendiculairement à ladite face de sortie principale,
dans lequel la forme principale de pavé droit du guide de lumière se prolonge à partir de ladite face d'entrée principale, dans la direction longitudinale et dans la hauteur de pavé, par au moins une forme de prisme auxiliaire (PA1), de type prisme droit à base triangle rectangle et comprenant trois face latérales,
ledit prisme auxiliaire ayant l'une au moins de ses trois faces latérales qui est réfléchissante, une des faces latérales à angle droit étant accolée plan sur plan à la face d'entrée principale (FI) délimitant une surface couverte de ladite face d'entrée principale, de manière à y définir dans le sens de la hauteur, une première fenêtre (11) d'injection de lumière (11) et une deuxième fenêtre (I2) d'injection de lumière (I2), chacune réservée pour une source d'éclairage respective parmi la source d'éclairage diurne et la source d'éclairage nocturne, ladite surface couverte formant une des fenêtres d'injection, la source dont l'injection de lumière s'effectue dans ledit pavé via ladite surface couverte étant configurée pour émettre selon la direction Z, et pour que l'injection dans le pavé (PP) via la surface couverte s'effectue de manière indirecte par réflexion sur ladite face latérale réfléchissante dudit prisme auxiliaire.

2. Dispositif d'éclairage selon la revendication 1, dans lequel les première (11) et deuxième (I2) fenêtres d'injection sont définies par un prisme auxiliaire (PA1) ayant une seule face réfléchissante parmi les trois faces latérales, ledit prisme étant agencé tel que
• une première face latérale (f1) qui est l'une des deux faces latérales à angle droit, est utilisée comme face de sortie auxiliaire, disposée plan sur plan sur la face d'entrée principale (FI), en la couvrant sur une première hauteur (h1) depuis un bord de la face d'entrée principale correspondant à une arête (E1) du pavé entre ladite face et une base (B1), ladite surface couverte formant la première fenêtre d'injection (11) et la surface non couverte formant la deuxième fenêtre d'injection (I2) ;
• une deuxième face latérale (f2) qui est l'autre des deux faces latérales à angle droit, est utilisée comme face d'entrée auxiliaire de lumière dans le guide pour une première source d'éclairage parmi les sources nocturne et diurne, qui est agencée sur une carte support propre dans un plan parallèle et face à ladite face d'entrée auxiliaire, et émet dans une direction orthogonale au plan de carte support, dans la direction de ladite face d'entrée auxiliaire (f2); et
• la troisième face latérale (f3) est la face réfléchissante (R₁₀₀), pour réfléchir la lumière émise par ladite première source vers la première fenêtre d'injection (11) sur la face d'entrée principale,
ledit agencement permettant une injection indirecte de lumière de ladite première source dans le pavé, par réflexion dans le prisme auxiliaire (PA1).

3. Dispositif d'éclairage selon la revendication 2, dans lequel l'autre source d'éclairage est agencée sur une carte support propre et émet dans une direction orthogonale au plan de carte support, dans la direction de la deuxième fenêtre d'injection (I2) sur la face d'entrée principale, permettant une injection directe de lumière dans le pavé.

4. Dispositif d'éclairage selon la revendication 2, dans lequel les sources d'éclairage nocturne et diurne sont agencées sur une carte support commune (PCB-c) qui est disposée dans un plan parallèle et dans la hauteur de la deuxième fenêtre d'injection (I4), et :
- la première source d'éclairage est agencée en face arrière de ladite carte support et émet dans une direction parallèle au plan de carte support, en direction de la face d'entrée auxiliaire (f2) sur le prisme auxiliaire (PA3), permettant une injection indirecte de lumière dans le pavé, par réflexion dans le prisme auxiliaire (PA3) et
- l'autre source d'éclairage est agencée en face avant de ladite carte support et émet dans une direction orthogonale au dit plan de carte support, en direction de la deuxième fenêtre d'injection (I4), permettant une injection directe de lumière dans le pavé.

5. Dispositif d'éclairage selon la revendication 2, comprenant
- un premier prisme auxiliaire (PA1) dont ladite première face latérale (f1), de sortie auxiliaire, définit la première fenêtre d'injection (11) et qui est agencé de sorte que ladite deuxième face latérale (f2), d'entrée auxiliaire, prolonge une base du pavé dans la direction longitudinale, et
- un deuxième prisme auxiliaire (PA2) dont ladite première face latérale (f1), de sortie auxiliaire, définit la première fenêtre d'injection (I2) et qui est agencé de sorte que ladite deuxième face latérale (f2), d'entrée auxiliaire, prolonge une base du pavé dans la direction longitudinale, et dont l'agencement des sources d'éclairage diurne et nocturne est tel que chacune est agencée sur une carte support propre et émet dans une direction orthogonale au plan de carte support dans la direction de la face d'entrée auxiliaire respective,
tel que pour chacune des sources d'éclairage, on a une injection indirecte de la lumière émise par chaque source d'éclairage dans le pavé, par réflexion dans le prisme auxiliaire respectif.

6. Dispositif d'éclairage selon l'une quelconque des revendications 1 à 5, dans lequel la première et la deuxième fenêtre d'injection divisent la hauteur de face d'entrée du pavé principale de manière sensiblement égale.

7. Dispositif d'éclairage selon l'une quelconque des revendications 1 à 5, dans lequel la hauteur de la fenêtre d'injection associée à la source d'éclairage diurne est supérieure à la hauteur de la fenêtre d'injection associée à la source d'éclairage nocturne.

8. Dispositif d'éclairage selon l'une quelconque des revendications 1 à 7, dans lequel les formes de prisme(s) auxiliaire(s) et de pavé principal (PP) sont réalisées dans des matériaux identiques ou compatibles et assemblées par collage.

9. Dispositif d'éclairage selon l'une quelconque des revendications 1 à 7, dans lequel le pavé droit principal (PP) et le ou les prismes auxiliaires (PA1, PA2) forment une pièce optique monolithique obtenue par moulage ou usinage d'un matériau optiquement transparent, puis dépôt d'un revêtement de surface sur la ou les face latérales réfléchissantes du ou des prismes auxiliaires, ou ledit revêtement de surface est une structures de couches minces diélectriques, ou une structure de couches minces métalliques, ou un film de micro prismes.

10. Dispositif d'éclairage selon l'une quelconque des revendications 1 à 9, dans lequel la face latérale de prisme auxiliaire qui est agencée pour recevoir l'éclairement de la source nocturne comporte un filtre optique sous forme d'une structure (R₁₀₀) de couches minces diélectriques déposées en surface.

11. Dispositif d'éclairage selon l'une quelconque des revendications 1 à 10, dans lequel le pavé principal est du type à gradient d'extraction de lumière dans la direction longitudinale du pavé, correspondant à la direction de l'injection latérale par la face d'entrée principale (FI).

## Patentansprüche

1. Hintergrundbeleuchtungsvorrichtung (1) für einen Flachbildschirm vom Flüssigkristallmatrixtyp, zum Anordnen auf der Rückseite der Flüssigkristallmatrix, wobei die Vorrichtung mit Nachtsichtgeräten kompatibel ist, die Folgendes enthält:
- eine im Tageslichtmodus verwendete Tageslichtquelle (S_{D}), die aus mindestens einer parallel zu einer Y-Richtung ausgerichteten Reihe von Leuchtdioden (DD) besteht;
- eine im Nachtsichtmodus verwendete Nachtlichtquelle (S_{N}), die aus mindestens einer parallel zu einer Y-Richtung ausgerichteten Reihe von Leuchtdioden (D_{N}) besteht, mit einem optischen Filter, der das von der Lichtquelle emittierte Licht mit der Verwendung von Nachtsichtgeräten kompatibel machen kann; und
- einen Lichtleiter (GL), konfiguriert zum Streuen des von der aktuellen Lichtquelle gelieferten Lichts in Abhängigkeit vom aktuellen Sichtmodus, Tag oder Nacht, über eine in einer XY-Ebene angeordnete Hauptausgangsfläche, wobei das Licht zum Beleuchten einer Rückseite der Flüssigkristallmatrix bestimmt ist,
wobei die Hauptausgangsfläche einer Basis (B2) einer Blockhauptform (PP) vom Typ eines geraden Prismas mit rechteckigen Basen entspricht, wobei der Abstand zwischen den beiden Basen des Blocks eine Höhe des Blocks definiert; und
- wobei das Zusammensetzen des Lichtleiters mit den Tages- und Nachtlichtquellen derart ist, dass das von jeder der Quellen emittierte Licht in einer Längsrichtung des Blocks durch eine als Haupteingangsfläche (FI) verwendete Seitenfläche des Blocks, die eine Seitenfläche des Blocks ist, eingeleitet wird, wobei die als Haupteingangsfläche verwendete Seitenfläche in einer YZ-Ebene lotrecht zur Hauptausgangsfläche angeordnet ist, wobei die gerade Blockhauptform des Lichtleiters von der Haupteingangsfläche aus in der Längsrichtung und in der Blockhöhe durch mindestens eine Hilfsprismaform (PA1) verlängert wird, die vom Typ eines geraden Prismas mit rechtwinkliger Dreiecksgrundfläche ist und drei Seitenflächen umfasst,
wobei mindestens eine der drei Seitenflächen des Hilfsprismas reflektierend ist, wobei eine der rechtwinkligen Seitenflächen planparallel an die Haupteingangsfläche (FI) angrenzt und eine bedeckte Fläche der Haupteingangsfläche begrenzt, um dort in Höhenrichtung ein erstes Fenster (11) zum Eintreten von Licht (I1) und ein zweites Fenster (12) zum Eintreten von Licht (I1) zu definieren, die jeweils für eine jeweilige Lichtquelle aus der Tageslichtquelle und der Nachtlichtquelle reserviert sind, wobei die bedeckte Fläche eines der Injektionsfenster bildet, wobei die Quelle, deren Lichtinjektion in den Block über die bedeckte Fläche erfolgt, zum Emittieren in der Z-Richtung konfiguriert ist, und damit die Injektion in den Block (PP) über die bedeckte Fläche indirekt durch Reflexion an der reflektierenden Seitenfläche des Hilfsprismas erfolgt.

2. Beleuchtungsvorrichtung nach Anspruch 1, wobei das erste (11) und zweite (12) Injektionsfenster durch ein Hilfsprisma (PA1) mit einer einzigen reflektierenden Fläche unter den drei Seitenflächen definiert sind, wobei das Prisma so ausgelegt ist, dass
• eine erste Seitenfläche (f1), die eine der beiden rechtwinklig zueinander stehenden Seitenflächen ist, als Hilfsaustrittsfläche verwendet wird, die planparallel auf der Haupteingangsfläche (FI) angeordnet ist, indem sie diese über eine erste Höhe (h1) von einer Kante der Haupteingangsfläche entsprechend einer Kante (E1) des Blocks zwischen der Fläche und einer Basis (B1) bedeckt, wobei die bedeckte Fläche das erste Injektionsfenster (11) bildet und die nicht bedeckte Fläche das zweite Injektionsfenster (12) bildet;
• eine zweite Seitenfläche (f2), die die andere der beiden rechtwinklig zueinander stehenden Seitenflächen ist, als Hilfslichteintrittsfläche in die Führung für eine erste Lichtquelle aus Nacht- und Tageslichtquellen verwendet wird, die auf einer eigenen Trägerkarte in einer Ebene parallel zu und gegenüber der Hilfslichteintrittsfläche ausgelegt ist und in einer Richtung orthogonal zur Trägerkartenebene in Richtung der Hilfslichteintrittsfläche (f2) emittiert; und
• die dritte Seitenfläche (f3) die reflektierende Fläche (R₁₀₀) ist, um das von der ersten Quelle emittierte Licht in Richtung des ersten Injektionsfensters (11) auf der Haupteingangsfläche zu reflektieren,
wobei die Anordnung indirekte Injektion von Licht von der ersten Quelle in den Block durch Reflexion in dem Hilfsprisma (PA1) ermöglicht.

3. Beleuchtungsvorrichtung nach Anspruch 2, wobei die weitere Lichtquelle auf einer eigenen Trägerkarte angeordnet ist und in einer Richtung orthogonal zur Trägerkartenebene in Richtung des zweiten Injektionsfensters (12) auf der Haupteingangsfläche emittiert, was eine direkte Lichteinstrahlung in den Block ermöglicht.

4. Beleuchtungsvorrichtung nach Anspruch 2, wobei die Nacht- und Tageslichtquellen auf einer in einer Ebene parallel und in der Höhe des zweiten Injektionsfensters (14) angeordneten gemeinsamen Trägerkarte (PCB-c) angeordnet sind, und:
- die erste Lichtquelle auf der Rückseite der Trägerkarte angeordnet ist und in einer Richtung parallel zur Trägerkartenebene in Richtung der Hilfseingangsfläche (f2) auf dem Hilfsprisma (PA3) emittiert, wodurch eine indirekte Lichtinjektion in den Block durch Reflexion in dem Hilfsprisma (PA3) ermöglicht wird, und
- die andere Lichtquelle an der Vorderseite der Trägerkarte angeordnet ist und in einer Richtung orthogonal zur Trägerkartenebene in Richtung des zweiten Injektionsfensters (14) emittiert, was eine direkte Lichtinjektion in den Block ermöglicht.

5. Beleuchtungsvorrichtung nach Anspruch 2, das Folgendes umfasst:
- ein erstes Hilfsprisma (PA1), dessen erste Hilfsausgangsseitenfläche (f1) das erste Injektionsfenster (11) definiert und das so angeordnet ist, dass die zweite Hilfseingangsseitenfläche (f2) eine Basis des Blocks in der Längsrichtung verlängert, und
- ein zweites Hilfsprisma (PA2), dessen erste Hilfsausgangsseitenfläche (f1) das erste Injektionsfenster (12) definiert und das so angeordnet ist, dass die zweite Hilfseingangsseitenfläche (f2) eine Basis des Blocks in der Längsrichtung verlängert, und bei dem die Tages- und Nachtlichtquellen so angeordnet sind, dass jede auf einer eigenen Trägerkarte angeordnet ist und in einer Richtung orthogonal zur Trägerkartenebene in Richtung der jeweiligen Hilfseingangsfläche emittiert, so dass für jede der Lichtquellen eine indirekte Injektion des von jeder Lichtquelle emittierten Lichts in den Block durch Reflexion im jeweiligen Hilfsprisma erfolgt.

6. Beleuchtungsvorrichtung nach einem der Ansprüche 1 bis 5, wobei das erste und das zweite Injektionsfenster die Eingangsflächenhöhe des Hauptblocks im Wesentlichen gleichmäßig unterteilen.

7. Beleuchtungsvorrichtung nach einem der Ansprüche 1 bis 5, wobei die Höhe des mit der Tageslichtquelle assoziierten Injektionsfensters größer ist als die Höhe des mit der Nachtlichtquelle assoziierten Injektionsfensters.

8. Beleuchtungsvorrichtung nach einem der Ansprüche 1 bis 7, wobei die Formen des/der Hilfsprismas und des Hauptblocks (PP) aus identischen oder kompatiblen Materialien hergestellt und durch Kleben zusammengefügt sind.

9. Beleuchtungsvorrichtung nach einem der Ansprüche 1 bis 7, wobei der gerade Hauptblock (PP) und das oder die Hilfsprisma(s) (PA1, PA2) ein monolithisches optisches Teil bilden, das durch Formen oder Bearbeiten eines optisch transparenten Materials und anschließendes Aufbringen einer Oberflächenbeschichtung auf die reflektierende(n) Seitenfläche(n) des/der Hilfsprismas erhalten wird, oder wobei die Oberflächenbeschichtung eine dielektrische Dünnschichtstruktur oder eine metallische Dünnschichtstruktur oder eine Mikroprismenfolie ist.

10. Beleuchtungsvorrichtung nach einem der Ansprüche 1 bis 9, wobei die zum Empfangen des Lichts von der Nachtlichtquelle vorgesehene Seitenfläche des Hilfsprismas einen optischen Filter in Form einer Struktur (R₁₀₀) aus auf die Oberfläche abgeschiedenen dielektrischen Dünnschichten aufweist.

11. Beleuchtungsvorrichtung nach einem der Ansprüche 1 bis 10, wobei der Hauptblock vom Typ mit einem Lichtextraktionsgradienten in Längsrichtung des Blocks ist, die der Richtung der seitlichen Injektion durch die Haupteingangsfläche (FI) entspricht.

## Claims

1. A backlighting device (1) for a flat display screen of the liquid-crystal matrix array type, to be arranged at the back of said liquid-crystal matrix array, said device being compatible with night-vision equipment, and containing
- a daytime light source (S_{D}) used in day-vision mode, formed of at least one row of light-emitting diodes (D_{D}) which are aligned in parallel to a Y direction;
- a nighttime light source (S_{N}) used in night-vision mode, which is formed of at least one row of light-emitting diodes (D_{N}) which are aligned in parallel to a Y direction, with an optical filter that is capable of making the light emitted by said light source compatible with the use of night-vision equipment; and
- a light guide (GL) that is configured to diffuse, via a main output face arranged in an XY plane, the light delivered by the current light source according to the current, day or night, vision mode, said light being for lighting a back face of said liquid-crystal matrix array,
said main output face corresponding to a base (B2) of a main cuboid form (PP) of the right prism with rectangular bases type, the distance between the two bases of the cuboid defining a cuboid height; and
- the light guide is assembled with the daytime and nighttime light sources such that the light emitted by each of the sources is injected along a longitudinal direction of the cuboid via a lateral face of the cuboid used as the main input face (FI), which is a lateral face of the cuboid, said lateral face used as the main input face being arranged in a plane YZ perpendicular to said main output face, wherein the main rectangular cuboid shape of the light guide is extended from said main input face, in the longitudinal direction and heightwise with respect to the cuboid, by at least one auxiliary prism shape (PA1), of the right prism type with a right-angled triangle base and comprising three lateral faces,
at least one of the three lateral faces of said auxiliary prism being reflective, one of the right-angled lateral faces being bonded surface-to-surface to the main input face (FI), delimiting a covered surface of said main input face, so as to define therein, in the heightwise direction, a first window (11) for light injection (11) and a second window (12) for light injection (12), each reserved for a respective light source from the daytime light source and the nighttime light source, said covered surface forming one of the injection windows, the source whose light injection takes place in said cuboid via said covered surface being configured to emit in the Z direction, and so that injection into the cuboid (PP) via the covered surface takes place indirectly by reflection on said reflective lateral face of said auxiliary prism.

2. The lighting device according to claim 1, wherein the first (I1) and second (12) injection windows are defined by an auxiliary prism (PA1), having a single reflective face among the three lateral faces, said prism being arranged such that
• a first lateral face (f1), which is one of the two lateral faces at right angles to each other, is used as an auxiliary output face, arranged surface-to-surface on the main input face (FI), by covering it over a first height (h1) from an edge of the main input face corresponding to an edge (E1) of the cuboid between said face and a base (B1), said covered surface forming the first injection window (11) and the uncovered surface forming the second injection window (12);
• a second lateral face (f2), which is the other of the two lateral faces at right angles to each other, is used as an auxiliary face for light input into the guide for a first light source among the nighttime and daytime sources, which is arranged on a specific carrier board in a plane parallel to and facing said auxiliary input face, and emits in a direction orthogonal to the carrier board plane, towards said auxiliary input face (f2); and
• the third lateral face (f3) is the reflective face (R₁₀₀), for reflecting the light emitted by said first source towards the first injection window (11) on the main input face,
said arrangement enabling indirect injection of light from said first source into the cuboid, by reflection in the auxiliary prism (PA1).

3. The lighting device according to claim 2, wherein the other light source is arranged on a specific carrier board and emits in a direction orthogonal to the carrier board plane, towards the second injection window (12) on the main input face, allowing direct injection of light into the cuboid.

4. The lighting device according to claim 2, wherein the nighttime and daytime light sources are arranged on a common carrier board (PCB-c) which is arranged in a plane that is parallel to and heightwise with respect to the second injection window (14), and
- the first light source is arranged on the back face of said carrier board and emits in a direction parallel to the carrier board plane, towards the auxiliary input face (f2) on the auxiliary prism (PA3), allowing indirect injection of light into the cuboid, by reflection within the auxiliary prism (PA3) and
- the other light source is arranged on the front face of said carrier board and emits in a direction orthogonal to said carrier board plane, towards the second injection window (14), allowing a direct injection of light into the cuboid.

5. The lighting device according to claim 2, comprising
- a first auxiliary prism (PA1), said first, auxiliary-output, lateral face (f1) of which defines the first injection window (11), and which is arranged such that said second, auxiliary-input, lateral face (f2) extends a base of the cuboid in the longitudinal direction, and
- a second auxiliary prism (PA2), said first, auxiliary-output, lateral face (f1) of which defines the first injection window (12), and which is arranged such that said second, auxiliary-input, lateral face (f2) extends a base of the cuboid in the longitudinal direction, and the arrangement of the daytime and nighttime light sources of which is such that each one is arranged on its own carrier board and emits in a direction orthogonal to the carrier board plane towards the respective auxiliary input face, such that for each of the light sources, there is indirect injection of the light emitted by each light source in the cuboid, by reflection within the respective auxiliary prism.

6. The lighting device according to any one of claims 1 to 5, wherein the first and second injection windows divide the input-face height of the main cuboid substantially equally.

7. The lighting device according to any one of claims 1 to 5, wherein the height of the injection window associated with the daytime light source is greater than the height of the injection window associated with the nighttime light source.

8. The lighting device according to any one of claims 1 to 7, wherein the shape of the auxiliary prism(s) and of the main cuboid (PP) are made of identical or compatible materials and assembled together by bonding.

9. The lighting device according to any one of claims 1 to 7, wherein the main rectangular cuboid (PP) and the one or more auxiliary prisms (PA1, PA2) form a monolithic optical part obtained by moulding or machining an optically transparent material, then depositing a surface coating on the one or more reflective lateral faces of the one or more auxiliary prisms, or said surface coating is a dielectric thin-film structure, or a metal thin-film structure, or a microprism film.

10. The lighting device according to any one of claims 1 to 9, wherein the auxiliary prism lateral face which is arranged to receive the light from the nighttime source has an optical filter in the form of a surface-deposited dielectric thin-film structure (R₁₀₀).

11. The lighting device according to any one of claims 1 to 10, wherein the main cuboid is of the light extraction gradient type along the longitudinal direction of the cuboid, corresponding to the direction of lateral injection via the main input face (FI).
